# EUROPÄISCHE PATENTSCHRIFT

(11) **EP 3 481 686 B1**
(45) Veröffentlichungstag und Bekanntmachung des Hinweises auf die Patenterteilung: **08.02.2023**
(21) Anmeldenummer: 17736896.6
(22) Anmeldetag: 26.06.2017
(51) Int. Cl.: B60T 8/17, B60T 13/66, B60T 13/68, B60T 17/22

(54) **VORRICHTUNG UND VERFAHREN ZUR VENTILANSTEUERUNG**
DEVICE AND METHOD FOR ACTUATING VALVES
DISPOSITIF ET PROCÉDÉ DE COMMANDE DE SOUPAPE

(30) Priorität: 06.07.2016 DE 102016112335
(43) Veröffentlichungstag der Anmeldung: 15.05.2019
(73) Patentinhaber: KNORR-BREMSE Systeme für Schienenfahrzeuge GmbH, 80809 München (DE)
(72) Erfinder: HARTL, Severin, 82449 Uffing am Staffelsee (DE); RASEL, Thomas, 85635 Höhenkirchen-Siegertsbrunn (DE); MAYER, Reinhold, 85757 Karlsfeld (DE)
(86) Internationale Anmeldenummer: PCT/EP2017/065719
(87) Internationale Veröffentlichungsnummer: WO 2018/007187

(56) Entgegenhaltungen:
- DE-A1-102009 003 212
- US-A1- 2011 029 213
- US-A1- 2013 261 857
- JIANHUI LUO ET AL: "Integrated Model-Based and Data-Driven Diagnosis of Automotive Antilock Braking Systems", IEEE TRANSACTIONS ON SYSTEMS, MAN AND CYBERNETICS. PART A:SYSTEMS AND HUMANS, IEEE SERVICE CENTER, PISCATAWAY, NJ, US, Bd. 40, Nr. 2, 1. März 2010 (2010-03-01), Seiten 321-336, XP011344811, ISSN: 1083-4427, DOI: 10.1109/TSMCA.2009.2034481

## Beschreibung

Die Erfindung betrifft eine Vorrichtung zur Ventilansteuerung, mittels derer für eine beispielsweise von einem übergeordneten Regelkreis vorgegebene Ansteuerdauer für ein Ventil eines Referenzsystems, mit der im Referenzsystem eine geforderte Druckänderung erzielbar ist, eine Ansteuerdauer für ein Ventil eines vom Referenzsystem abweichenden Zielsystems bestimmt wird, mit der die geforderte Druckänderung auch im Zielsystem erreicht wird. Die Erfindung betrifft ferner ein Verfahren zur Ventilansteuerung, um aus einer vorgegebenen Ansteuerdauer für ein Ventil eines Referenzsystems, mit der im Referenzsystem eine geforderte Druckänderung erzielbar ist, eine Ansteuerdauer für ein Ventil eines Zielsystems zu bestimmen, mittels derer die geforderte Druckänderung auch im Zielsystem erreicht wird.

Sind Schaltventile, beispielsweise für Bremseinrichtungen von Schienenfahrzeugen, Bestandteil eines Regelkreises, insbesondere eines Regelkreises zur Druckregelung, so wird dieser Regelkreis auf normierte Druckänderungen des Referenzsystems, das eine Referenzventildynamik und eine pneumatische Geschwindigkeit des Referenzsystems aufweist, optimiert. Der Regelkreis wird damit an einen genormten Zustand, nämlich an das Referenzsystem, angepasst. Das normierte pneumatische Zeitverhalten des Referenzsystems in Kombination mit der Ventildynamik des Referenzsystems stellt dann dem übergeordneten Regelkreis, der die Druckänderungen im System regelt, normierte Druckänderungen zur Verfügung.

Das System ist nachfolgend für den Einsatz in einem Fahrzeug an die realen Einsatzbedingungen, d.h. an ein vom Referenzsystem abweichendes reales System (Zielsystem) anzupassen. Das Zielsystem kann vom Referenzsystem beispielsweise durch eine unterschiedliche Ventildynamik und durch ein unterschiedliches pneumatisches Zeitverhalten abweichen. Die Anpassung wird bei der Erstinbetriebnahme vorgenommen. Die Anpassung erfolgt zum Beispiel bei Gleitschutzventilen für Schienenfahrzeug-Bremssysteme durch entsprechende Bedüsung. Das pneumatische Zeitverhalten des Systems wird dabei durch die Wahl geeigneter Düsen so angepasst, dass durch den auf normierte Druckänderungen eines Referenzsystems hin optimierten Regelkreis die vom Regelkreis geforderten Druckänderungen auch im realen System, d.h. im Zielsystem eingestellt werden können. Das Zeitverhalten des realen, d.h. des Zielsystems, wird somit mit mechanischen Düsen an das Zeitverhalten des Referenzsystems angepasst, so dass die Dauer der Ansteuerimpulse der Ventile im Zielsystem so gewählt werden kann, dass die daraus resultierenden Druckänderungen im Zielsystem den gleichen geforderten Verlauf haben wie im Referenzsystem.

Dieses Verfahren der Inbetriebnahme und der Adaption der Bremsdruckregelung an ein vom Referenzsystem abweichendes Zielsystem erfordert somit durch Bedüsung mechanische Eingriffe in die Systeme. Um in mehrteiligen Fahrzeugen, zum Beispiel in Triebzügen, die gleiche Bedüsung verwenden zu können, können Abweichungen von der optimalen Bedüsung erforderlich werden. Darüber hinaus bietet der Einsatz von Düsen lediglich die Möglichkeit, das pneumatische Zeitverhalten eines Systems zu verlangsamen. Eine Beschleunigung ist dagegen nicht möglich.

Die US 2013 / 0 261 857 A1 zeigt eine Vorrichtung zur Berechnung eines Bremsdruckes, die einen Sollwert des Druckes im Bremszylinder einer Druckluftbremse berechnet. Ferner zeigt diese Druckschrift auch ein Regelsystem, das mit einer solchen Vorrichtung ausgerüstet ist.

Die DE 10 2009 003 212 A1 betrifft ein Verfahren zum Betreiben eines Einspritzventils, insbesondere einer Brennkraftmaschine eines Kraftfahrzeugs, bei dem eine Komponente des Einspritzventils, insbesondere eine Ventilnadel, mittels eines elektromagnetischen Aktors angetrieben wird und bei dem der Aktor mit einem eine Ansteuerdauer aufweisenden Ansteuersignal angesteuert wird, um eine von der Ansteuerdauer abhängige Einspritzmenge einzuspritzen. Dabei wird die Ansteuerdauer in Abhängigkeit eines für das Einspritzventil individuellen Korrekturwerts korrigiert, um eine korrigierte Ansteuerdauer zu erhalten.

Der Erfindung liegt die Aufgabe zugrunde, eine Vorrichtung sowie ein Verfahren bereitzustellen, durch die ein für das Zeitverhalten eines Referenzsystems optimierter Druckregelkreis auch für das Zielsystem verwendet werden kann, ohne dass die Adaption an das Zielsystem eine Anpassung mittels mechanischer Düsen erfordert.

Diese Aufgabe wird durch eine Vorrichtung zur Ventilansteuerung mit den Merkmalen des Anspruchs 1 sowie durch ein Verfahren zur Ventilansteuerung mit den Verfahrensschritten des Anspruchs 6 gelöst. Weitere Merkmale der Erfindung ergeben sich aus den Unteransprüchen.

Die erfindungsgemäße Vorrichtung zur Ventilansteuerung umfasst einen Signaleingang, über den eine Ansteuerdauer für ein Ventil eines Referenzystems vorgegeben wird, wobei mit der vorgegebenen Ansteuerdauer eine geforderte Druckänderung im Referenzsystem erzielt werden kann, einen Signalausgang, um eine Ansteuerdauer für ein Ventil eines Zielsystems ausgeben zu können, mittels derer die geforderte

Druckänderung auch im Zielsystem erzielt wird, sowie eine Speichereinrichtung, in der die effektive Öffnungszeit des Ventils des Referenzystems, die bei einer vorgegebenen Ansteuerdauer erzielt wird, die für eine zu erzielende effektive Öffnungszeit des Ventils des Zielsystems erforderliche Ansteuerdauer sowie ferner Parameter, die pneumatische Eigenschaften des Referenzsystems und des Zielsystems kennzeichnen, abgespeichert sind. Die erfindungsgemäße Vorrichtung zur Ventilansteuerung weist eine Einrichtung auf, die die zu der vorgegebenen Ansteuerdauer für das Ventil des Referenzsystems gehörende effektive Öffnungszeit des Ventils unter Verwendung der in der Speichereinrichtung abgespeicherten Daten bestimmt. Sie weist ferner eine Einrichtung auf, die eine der effektiven Öffnungszeit des Ventils des Referenzsystems entsprechende effektive Öffnungszeit des Ventils des Zielsystems, durch die im Zielsystem dieselbe Druckänderung erzielt wird wie im Referenzsystem, bestimmt. Die Bestimmung erfolgt mittels der die pneumatischen Eigenschaften des Referenzsystems und des Zielsystems kennzeichnenden Parameter, die in der Speichereinrichtung abgespeichert sind. Die erfindungsgemäße Vorrichtung zur Ventilansteuerung weist des Weiteren eine Einrichtung auf, die die zum Erzielen der effektiven Öffnungszeit des Ventils des Zielsystems erforderliche Ansteuerdauer des Ventils unter Verwendung der in der Speichereinrichtung abgespeicherten Daten bestimmt.

Das Referenzsystem ist das System, für das der Regelkreis, mittels dessen die Druckänderungen im System geregelt werden, optimiert ist. Die Optimierung des Regelkreises erfolgt beispielsweise während der Entwicklungsphase. Das Referenzsystem weist ein vorgegebenes pneumatisches Zeitverhalten und eine vorgegebene Ventildynamik auf.

Die erfindungsgemäße Vorrichtung zur Ventilansteuerung hat einen Signaleingang, über den die Vorrichtung eine Ansteuerdauer, die auf ein Ventil eines Referenzsystems bezogen ist, erhält. Diese Ansteuerdauer wird üblicherweise von einem übergeordneten Regelkreis in Bezug auf ein Referenzsystem bestimmt, und mittels dieser Ansteuerdauer kann in einem Referenzsystem eine vom übergeordneten Regelkreis geforderte Druckänderung eingestellt werden.

Die erfindungsgemäße Vorrichtung zur Ventilansteuerung weist ferner einen Signalausgang auf. Durch den Signalausgang wird beispielsweise an eine Treiber- bzw. Ansteuerstufe für ein Ventil des Zielsystems eine Ansteuerdauer ausgegeben, um das Ventil des Zielsystems, d.h. des realen Systems anzusteuern, wobei mittels der ausgegebenen Ansteuerdauer im Zielsystem eine Druckänderung erzielt werden kann, die der Druckänderung im Referenzsystem entspricht.

In der Speichereinrichtung der erfindungsgemäßen Vorrichtung zur Ventilansteuerung werden einerseits Informationen über die Ventildynamik des Referenzsystems sowie des Zielsystems abgelegt. Für das Ventil des Referenzsystems sind die effektiven Öffnungszeiten des Ventils, die sich für jeweils vorgegebene Ansteuerdauern des Ventils ergeben, hinterlegt. Dies kann beispielsweise in Form von Kennlinien oder Kennfeldern erfolgen. Für das Ventil des Zielsystems ist abgelegt, welche Ansteuerdauern erforderlich sind, um eine zu erzielende effektive Öffnungszeit des Ventils des Zielsystems zu erreichen. Wird somit für das Ventil des Zielsystems eine effektive Öffnungszeit gefordert, um eine gewünschte Druckänderung im Zielsystem zu erreichen, so kann aus diesen Daten bestimmt werden, über welche Dauer das Ventil durch die Ansteuerung anzusteuern ist, damit sich die geforderte effektive Öffnungszeit des Ventils einstellt. Auch diese Daten können als Kennlinien oder Kennfelder abgelegt werden. Die Ventildynamik des Referenzsystems und des Zielsystems können experimentell, aber auch rechnerisch ermittelt werden.

Der Vorrichtung zur Ventilansteuerung wird beispielsweise durch einen übergeordneten Regelkreis zur Bremsdruckregelung eine Ansteuerdauer vorgegeben. Diese Ansteuerdauer entspricht einer Ansteuerdauer, die für ein Ventil des Referenzsystems, für das der Regelkreis optimiert ist, erforderlich wäre, um im Referenzsystem eine vom Regelkreis geforderte Druckänderung einzustellen.

In der erfindungsgemäßen Vorrichtung zur Ventilansteuerung wird zunächst in einer ersten Einrichtung aus der vorgegebenen Ansteuerdauer für das Ventil des Referenzsystems die effektive Öffnungszeit des Ventils des Referenzsystems ermittelt. Diese gibt an, wie lange das Ventil bei der jeweiligen Ansteuerung tatsächlich geöffnet ist. Die zu einer vorgegebenen Ansteuerdauer gehörende effektive Öffnungszeit des Ventils wird mittels der in der Speichereinrichtung abgespeicherten Daten, die die effektive Öffnungszeit des Ventils des Referenzsystems in Abhängigkeit von der vorgegebenen Ansteuerdauer beispielsweise in Form von Kennfeldern abbilden, ermittelt.

Nachdem die effektive Öffnungszeit des Ventils des Referenzsystems ermittelt wurde, wird im nächsten Schritt in der weiteren, dafür vorgesehenen Einrichtung eine effektive Öffnungszeit des Ventils des Zielsystems ermittelt, die im Zielsystem zu derselben Druckänderung führt, wie sie sich im Referenzsystem durch die vorgegebene Ansteuerdauer einstellen würde. Dabei werden die pneumatischen Eigenschaften des Zielsystems und des Referenzsystems berücksichtigt. Die pneumatischen Eigenschaften des Zielsystems und des Referenzsystems sind ebenfalls in der Speichereinrichtung hinterlegt.

Unterscheiden sich die pneumatischen Eigenschaften des Referenzsystems und des Zielsystems voneinander, da beispielsweise die pneumatische Geschwindigkeit des Zielsystems, d.h. die Druckänderung über der Zeit, im Zielsystem größer ist als die pneumatische Geschwindigkeit des Referenzsystems (d.h. das Zielsystem ist schneller als das Referenzsystem), so genügt im Zielsystem eine kürzere effektive Öffnungszeit des Ventils, um dieselbe Druckänderung im Zielsystem zu erhalten, wie sie im Referenzsystem bei der vom übergeordneten Regelkreis vorgegebenen Ansteuerdauer erhalten werden würde.

Ist hingegen die pneumatische Geschwindigkeit des Zielsystems, d.h. die Änderung des Druckes im Zielsystem über der Zeit, geringer als die pneumatische Geschwindigkeit des Referenzsystems, so werden im Zielsystem prinzipiell längere effektive Öffnungszeiten des Ventils des Zielsystems benötigt, um dieselbe Druckänderung einzustellen wie sie sich aufgrund der vorgegebenen Ansteuerdauer im Referenzsystem ergeben würde. Bei gleicher pneumatischer Geschwindigkeit von Ziel- und Referenzsystem werden gleiche effektive Öffnungszeiten benötigt.

In der weiteren Einrichtung wird im nächsten Schritt berücksichtigt, dass die Ventildynamik des Ventils des Zielsystems von der Ventildynamik des Ventils des Referenzsystems abweichen kann. Das Ventil des Zielsystems kann schneller sein als das Ventil des Referenzsystems, es kann langsamer sein, oder es kann gleich schnell sein. Ist das Ventil des Zielsystems schneller, so ergibt sich bei gleicher Ansteuerdauer des Ventils eine größere effektive Öffnungszeit des Ventils des Zielsystems im Vergleich zur effektiven Öffnungszeit des Ventils des Referenzsystems. Aus der in den vorhergehenden Schritten bestimmten effektiven Öffnungszeit des Ventils des Zielsystems, die zur selben Druckänderung führt wie bei einer Ansteuerung eines Referenzsystems mit der vom Druckregelkreis vorgegebenen Ansteuerdauer, wird durch die im Speicher hinterlegten Daten die Ansteuerdauer des Ventils des Zielsystems ermittelt, die erforderlich ist, um die in den vorigen Schritten ermittelte effektive Öffnungszeit des Ventils zu erhalten.

Die erfindungsgemäße Vorrichtung zur Ventilansteuerung ermittelt somit in den jeweiligen Einrichtungen aus der Ansteuerdauer, die von einem übergeordneten Regelkreis vorgegeben wird, um in einem Referenzsystem eine gewünschte Druckänderung zu erzielen, unter Berücksichtigung der Ventildynamik des Ventils des Referenzsystems, der Ventildynamik des Zielsystems sowie der pneumatischen Eigenschaften des Referenzsystems und des Zielsystems eine Ansteuerdauer für ein Ventil des Zielsystems, mit der das Zielsystem angesteuert werden muss, um im Zielsystem dieselbe Druckänderung zu erhalten wie im Referenzsystem.

Eine im Sinne der Erfindung ausgebildete Vorrichtung zur Ventilansteuerung zeichnet sich vor allem dadurch aus, dass die Anpassung der Ventilsteuerung an ein von einem Referenzsystem abweichendes Zielsystem durch Parametrierung des Systems unter Kenntnis vorher ermittelter Parameter der Ventildynamik und der pneumatischen Eigenschaften des Referenzsystems und des Zielsystems erfolgen kann. Eine Anpassung des Zielsystems an das Referenzsystem durch den Einsatz von Düsen entfällt. Dadurch entfällt auch eine aufwändige Ermittlung der geeigneten Durchmesser der Ventildüsen. Damit kann insbesondere auch bei technischen Einheiten, beispielsweise bei Triebzügen, eine optimale Anpassung aller Regelkreise im System erfolgen, wenn diese Zielsysteme voneinander abweichen, ohne dass eine Anpassung durch den Einsatz von Düsen erforderlich ist. Dabei muss auch nicht von der optimalen Bedüsung abgewichen werden, um die Zahl unterschiedlicher verwendeter Düsen zu reduzieren. Somit müssen keine einbauspezifischen Elemente verbaut werden, wodurch die Teilevielfalt reduziert wird und Vorteile bei der Logistik der Projektierung und der Montage erzielt werden können.

In einer weiteren vorteilhaften Ausgestaltung der Erfindung ist die effektive Öffnungszeit des Ventils des Zielsystems, bei der im Zielsystem dieselbe Druckänderung erreicht wird wie im Referenzsystem mit der effektiven Öffnungszeit des Ventils des Referenzsystems, unter Berücksichtigung der pneumatischen Geschwindigkeiten des Referenzsystems und des Zielsystems bestimmbar.

Die pneumatische Geschwindigkeit des Referenzsystems ist dabei der Gradient des Druckes im Referenzsystem, d.h. die Ableitung des Druckes im Referenzsystem nach der Zeit. Die pneumatische Geschwindigkeit des Zielsystems ist ebenfalls der Gradient des Druckes im Zielsystem, d.h. die Ableitung des Druckes im Zielsystem nach der Zeit. Diese Größen können messtechnisch und auch rechnerisch bestimmt werden.

Die pneumatische Geschwindigkeit des Referenzsystems kann dabei größer, kleiner oder gleich der pneumatischen Geschwindigkeit des Zielsystems sein. Ist die pneumatische Geschwindigkeit des Referenzsystems größer als die pneumatische Geschwindigkeit des Zielsystems, kommt es im Referenzsystem zu schnelleren Druckänderungen, so dass für das Ventil des Zielsystems eine längere effektive Öffnungszeit als die effektive Öffnungszeit des Ventils des Referenzsystems eingestellt werden muss, um im Zielsystem, in dem die Druckänderungen langsamer stattfinden, dieselbe Druckänderung zu erzielen. Die pneumatische Geschwindigkeit des Referenz- und des Zielsystems ist nicht allein abhängig vom Ventiltyp, der hier bereits durch die separaten Parameter, die die Ventildynamik abbilden, berücksichtig wird, sondern von zahlreichen weiteren Einflussgrößen, wie zum Beispiel Verrohrungen oder Zylindergrößen, die das Volumen des Systems mitbestimmen und nicht immer einheitlich sind. Aus diesem Grund können sich in verschiedenen pneumatischen Regelkreisen innerhalb eines Fahrzeuges trotz Verwendung eines einheitlichen Ventiltyps, d.h. trotz derselben Ventildynamik der verschiedenen Ventile, unterschiedliche pneumatische Geschwindigkeiten ergeben. Die Erfindung ermöglicht es, durch geeignete Parameteranpassung solche unterschiedlichen pneumatischen Geschwindigkeiten bei identischen Ziel- und Referenzventilen oder auch bei unterschiedlichen Ventildynamiken zu kompensieren.

In einer weiteren vorteilhaften Ausgestaltung der Erfindung ist die der Dauer der effektiven Öffnungszeit des Ventils des Referenzsystems entsprechende effektive Öffnungszeit des Ventils des Zielsystems durch Multiplikation der effektiven Öffnungszeit des Ventils des Referenzsystems mit dem Quotienten aus der pneumatischen Geschwindigkeit des Referenzsystems und der pneumatischen Geschwindigkeit des Zielsystems bestimmbar. Die geforderte effektive Öffnungszeit des Ventils des Zielsystems, aufgrund derer sich eine vom übergeordneten Regelkreis geforderte Druckänderung auch im Zielsystem einstellt, wird damit aus der effektiven Öffnungszeit des Ventils des Referenzsystems, mittels derer sich im Referenzsystem die geforderte Druckänderung ergeben würde, bestimmt. Dies erfolgt, indem die effektive Öffnungszeit des Ventils des Referenzsystems mit dem Quotienten aus der pneumatischen Geschwindigkeit des Referenzsystems und der pneumatischen Geschwindigkeit des Zielsystems multipliziert wird. Der Quotient aus der pneumatischen Geschwindigkeit des Referenzsystems und der pneumatischen Geschwindigkeit des Zielsystems bildet somit einen Korrekturfaktor für die effektive Öffnungszeit des Referenzsystems, um aus dieser die effektive Öffnungszeit des Ventils des Zielsystems zu ermitteln, mit der die geforderte Druckänderung im Zielsystem erzielt werden kann.

Ist das Referenzsystem schneller als das Zielsystem, d.h. die pneumatische Geschwindigkeit des Referenzsystems ist höher als die des Zielsystems, so ist der Quotient aus der pneumatischen Geschwindigkeit des Referenzsystems und der pneumatischen Geschwindigkeit des Zielsystems größer als 1, so dass die erforderliche effektive Öffnungszeit des Ventils des Zielsystems größer ist als die effektive Öffnungszeit des Ventils des Referenzsystems. Wenn die pneumatische Geschwindigkeit des Zielsystems geringer ist als die des Referenzsystems, d.h. das Zielsystem ist langsamer als das Referenzsystem, muss somit das Ventil des Zielsystems länger geöffnet bleiben, um im Zielsystem dieselbe Druckänderung erzielen zu können.

Ist hingegen das Zielsystem schneller als das Referenzsystem, da es eine größere pneumatische Geschwindigkeit aufweist als das Referenzsystem, so ist der Quotient kleiner als 1, und das Ventil des Zielsystems ist dementsprechend kürzer geöffnet, um dieselbe Druckänderung zu erzielen wie im Referenzsystem.

In einer weiteren vorteilhaften Ausgestaltung der Erfindung ist die effektive Öffnungszeit des Ventils des Zielsystems, die der Dauer der effektiven Öffnungszeit des Ventils des Referenzsystems entspricht, um im Zielsystem dieselbe Druckänderung aufgrund der Ansteuerungsdauer zu erzielen wie im Referenzsystem, durch Multiplikation mit dem Quotienten aus dem pneumatischen Leitwert des Referenzsystems und dem pneumatischen Leitwert des Zielsystems bestimmbar. Dies ist dann möglich, wenn die Volumina des Referenzsystems und des Zielsystems identisch sind. Der pneumatische Leitwert beschreibt dabei das Verhältnis zwischen der maximalen Durchflussmenge und dem absoluten Eingangsdruck bei kritischem Durchfluss, d.h. bei Überschalldruckzustand. Der pneumatische Leitwert des Referenzsystems und des Zielsystems kann dabei insbesondere messtechnisch bestimmt werden.

In einer weiteren vorteilhaften Ausgestaltung der erfindungsgemäßen Vorrichtung zur Ventilansteuerung sind des Weiteren ein Signaleingang für den Druck vor dem Ventil des Zielsystems und ein Signaleingang für den Druck nach dem Ventil des Zielsystems vorgesehen. In der Speichereinrichtung werden die bei der vorgegebenen Ansteuerdauer erzielte effektive Öffnungszeit des Ventils des Referenzystems und die für eine zu erzielende effektive Öffnungszeit des Ventils des Zielsystems erforderliche Ansteuerdauer dabei des Weiteren in Abhängigkeit von den Drücken vor und nach dem Ventil des Zielsystems abgespeichert. Das Bestimmen der zu der vorgegebenen Ansteuerdauer für das Ventil des Referenzsystems gehörenden effektiven Öffnungszeit des Ventils des Referenzsystems sowie das Bestimmen der zum Erzielen der effektiven Öffnungszeit des Ventils des Zielsystems erforderlichen Ansteuerdauer des Ventils des Zielsystems erfolgt somit unter Berücksichtigung der Drücke vor und nach dem Ventil des Zielsystems.

Dies ist dann erforderlich, wenn die Ventildynamik des Referenz- bzw. des Zielsystems nicht nur von der Ansteuerdauer des Ventils abhängig ist, sondern die effektive Öffnungszeit des Ventils neben der Ansteuerdauer auch durch die Druckverhältnisse am Ventil beeinflusst wird. Beispielsweise kann eine Druckdifferenz an Membranen eines Ventils die Ventildynamik beeinflussen, so dass das Ventil in Abhängigkeit von den jeweiligen Druckverhältnissen schneller oder langsamer öffnet und die effektive Öffnungszeit bei einer vorgegebenen Ansteuerdauer somit abhängig von den Druckverhältnissen geringer oder höher wird. Die Drücke können, um die effektive Öffnungszeit der Ventile in Abhängigkeit von der Ansteuerdauer und den Drücken zu bestimmen, in der Speichereinrichtung der erfindungsgemäßen Vorrichtung ebenfalls durch Kennlinien oder Kennfelder berücksichtigt werden. Die Abhängigkeit der effektiven Öffnungszeit eines Ventils von den Druckverhältnissen kann messtechnisch bestimmt werden, aber auch eine rechnerische Ermittlung ist möglich.

In dem erfindungsgemäßen Verfahren zur Ventilansteuerung wird zunächst eine sich bei einer vorgegebenen Ansteuerdauer eines Ventils eines Referenzsystems einstellende effektive Öffnungszeit des Ventils des Referenzsystems bestimmt, mit der im Referenzsystem eine geforderte Druckänderung erzielt wird. Danach wird eine effektive Öffnungszeit eines Ventils eines Zielsystems bestimmt, die der effektiven Öffnungszeit des Ventils des Referenzsystems, durch die sich die geforderte Druckänderung ergibt, entspricht. Anschließend wird die erforderliche Ansteuerdauer für das Ventil des Zielsystems bestimmt, über die das Ventil des Zielsystems angesteuert werden muss, um die effektive Öffnungszeit des Ventils des Zielsystems, mittels derer sich die geforderte Druckänderung einstellt, erzielt werden kann. Das Ventil wird dann mit der somit erforderlichen Ansteuerdauer angesteuert, so dass sich im Zielsystem die geforderte Druckänderung ergibt.

Durch das erfindungsgemäße Verfahren wird somit aus einer Ansteuerdauer für ein Ventil eines Referenzsystems, die von einem übergeordneten Regelkreis vorgegeben wird, eine geforderte Ansteuerdauer für ein Ventil eines Zielsystems bestimmt, mit der sich im Zielsystem dieselbe Druckänderung ergibt wie im Referenzsystem. Dafür wird zunächst die effektive Ventilöffnungszeit des Ventils des Referenzsystems, die sich für die vorgegebene Ansteuerdauer des Ventils ergibt, bestimmt. Aus der effektiven Öffnungszeit des Ventils des Referenzsystems wird dann eine effektive Öffnungszeit eines Ventils des Zielsystems ermittelt, aufgrund derer sich im Zielsystem dieselbe Druckänderung ergibt wie die Druckänderung im Referenzsystem aufgrund der Ansteuerung über die vorgegebene Ansteuerdauer. Weiterhin wird dann unter Kenntnis der Ventildynamik des Ventils des Zielsystems ermittelt, wie lange das Ventil des Zielsystems angesteuert werden muss, um die ermittelte effektive Öffnungszeit zu erreichen, so dass im Zielsystem die geforderte Druckänderung erreicht wird. Mit der ermittelten Ansteuerdauer des Ventils des Zielsystems wird dann das Ventil des Zielsystems angesteuert, und es ergibt sich auch im Zielsystem die vom übergeordneten Regelkreis geforderte Druckänderung. Die Bestimmung der effektiven Öffnungszeit des Ventils des Referenzsystems aus der vorgegebenen Ansteuerdauer und die Bestimmung der erforderlichen Ansteuerdauer des Ventils des Zielsystems aus der geforderten effektiven Öffnungszeit werden dabei unter Berücksichtigung der Ventilparameter vorgenommen. Die Ermittlung der effektiven Öffnungszeit des Ventils des Zielsystems, mit der im Zielsystem dieselbe Druckänderung erzielt wird wie die sich im Referenzsystem einstellende Druckänderung aufgrund der effektiven Öffnungszeit des Ventils des Referenzsystems, erfolgt unter Berücksichtigung der pneumatischen Eigenschaften von Ziel- und Referenzsystem.

In einer besonders vorteilhaften Ausgestaltung des erfindungsgemäßen Verfahrens wird, um die effektive Öffnungszeit des Ventils des Zielsystems zu bestimmen, mit der sich dieselbe Druckänderung ergibt wie im Referenzsystem bei der effektiven Öffnungszeit des Ventils des Referenzsystems, die effektive Öffnungszeit des Ventils des Referenzsystems mit dem Quotienten aus der pneumatischen Geschwindigkeit des Referenzsystems und der pneumatischen Geschwindigkeit des Zielsystems multipliziert. Weist das Zielsystem somit eine höhere Dynamik auf, d.h. ist seine pneumatische Geschwindigkeit größer als die des Referenzsystems, so ist der Quotient kleiner als 1, und die effektive Öffnungszeit des Ventils des Zielsystems ist entsprechend kleiner als die effektive Öffnungszeit des Ventils des Referenzsystems. Ist das Zielsystem hingegen langsamer, so ist der Quotient größer als 1, und die effektive Öffnungszeit des Zielsystems ist entsprechend länger als die effektive Öffnungszeit des Ventils des Referenzsystems. Die pneumatische Geschwindigkeit ist dabei der zeitliche Gradient des Druckes im System, d.h. die zeitliche Ableitung des Druckes im Referenz- bzw. im Zielsystem.

In einer weiteren vorteilhaften Ausgestaltung des erfindungsgemäßen Verfahrens wird die effektive Öffnungszeit des Ventils des Referenzsystems mit dem Quotienten aus dem pneumatischen Leitwert des Referenzsystems und dem pneumatischen Leitwert des Zielsystems multipliziert, um die effektive Öffnungszeit des Ventils des Zielsystems, durch die im Zielsystem dieselbe Druckänderung erzielt wird wie im Referenzsystem, zu bestimmen. Dies ist dann möglich, wenn die Volumina des Referenzsystems und des Zielsystems identisch sind.

In einer weiteren vorteilhaften Ausgestaltung des erfindungsgemäßen Verfahrens erfolgt die Bestimmung der sich bei der vorgegebenen Ansteuerdauer des Ventils des Referenzsystems einstellenden effektiven Öffnungszeit, mit der im Referenzsystem die geforderte Druckänderung erzielbar ist, anhand eines Kennfeldes oder einer Kennlinie. Beispielsweise kann in einer Kennlinie für ein Ventil des Referenzsystems in Abhängigkeit von verschiedenen Ansteuerdauern die sich für die jeweilige Ansteuerdauer ergebende effektive Öffnungszeit des Ventils abgelegt werden.

In einer weiteren vorteilhaften Ausgestaltung des erfindungsgemäßen Verfahrens wird auch die zum Erzielen der effektiven Öffnungszeit des Ventils des Zielsystems erforderliche Ansteuerdauer anhand eines Kennfeldes oder anhand einer Kennlinie bestimmt. In einer Kennlinie sind dann beispielsweise in Abhängigkeit von gewünschten effektiven Öffnungszeiten die Ansteuerdauern für das Ventil des Zielsystems abgelegt, die angewandt werden müssen, um die jeweilige gewünschte effektive Öffnungszeit zu erreichen.

In einer weiteren vorteilhaften Ausgestaltung des erfindungsgemäßen Verfahrens werden bei der Bestimmung der sich einstellenden effektiven Öffnungszeit des Ventils des Referenzsystems bei jeweils vorgegebener Ansteuerdauer sowie bei der zum Erzielen der effektiven Öffnungszeit des Ventils des Zielsystems erforderlichen Ansteuerdauer die Drücke vor und hinter dem Ventil des Zielsystems berücksichtigt. Dies kann beispielsweise durch Kennfelder geschehen, in denen die Ansteuerdauern bzw. Öffnungszeiten in Abhängigkeit nicht nur von den jeweiligen Öffnungszeiten bzw. Ansteuerdauern, sondern auch von den Drücken vor und hinter dem Ventil abgelegt sind. Derartige Kennfelder können beispielsweise messtechnisch bestimmt werden. Die Drücke können dabei durch Sensoren vor und hinter dem Ventil des Zielsystems gemessen werden.

In einer weiteren vorteilhaften Ausgestaltung des erfindungsgemäßen Verfahrens wird die Abtastzeit eines übergeordneten Regelkreises oder auch ein ganzzahliges Mehrfaches der Abtastzeit eines übergeordneten Regelkreises als Sollzeit für die vorgegebene Ansteuerdauer verwendet. Wenn die Funktion zur Ermittlung der Ansteuerzeit des Zielsystems Bestandteil eines übergeordneten Regelkreises ist, der für ein Abtastintervall einen konstanten Ansteuerzustand, beispielsweise 'Druck aufbauen', 'Druck halten' oder 'Druck senken' ausgibt, kann die Dauer des Abtastintervalls im Kontext mit dem Ansteuerzustand der übergeordneten Regelung direkt als Sollzeit verwendet werden. Bei unverändertem Ansteuerzustand des übergeordneten Regelkreises über mehrere Abtastschritte hinweg ergibt sich dadurch eine Zerlegung der Ansteuerung des Zielsystems in kleine Einzelschritte. Die Ansteuerung der Vorrichtung zur Ventilansteuerung bleibt dabei über ein Abtastintervall jeweils konstant und ändert sich erst nach Ablauf eines Abtastintervalls.

Ausführungsbeispiele der Erfindung werden nachfolgend anhand der beigefügten Zeichnungen beschrieben. Darin zeigen, zum Teil schematisch:
- Fig. 1:: ein Blockschaltbild der erfindungsgemäßen Vorrichtung und des darin durchgeführten Verfahrens,
- Fig. 2:: ein erstes Funktionsbeispiel, und
- Fig. 3:: ein zweites Funktionsbeispiel.

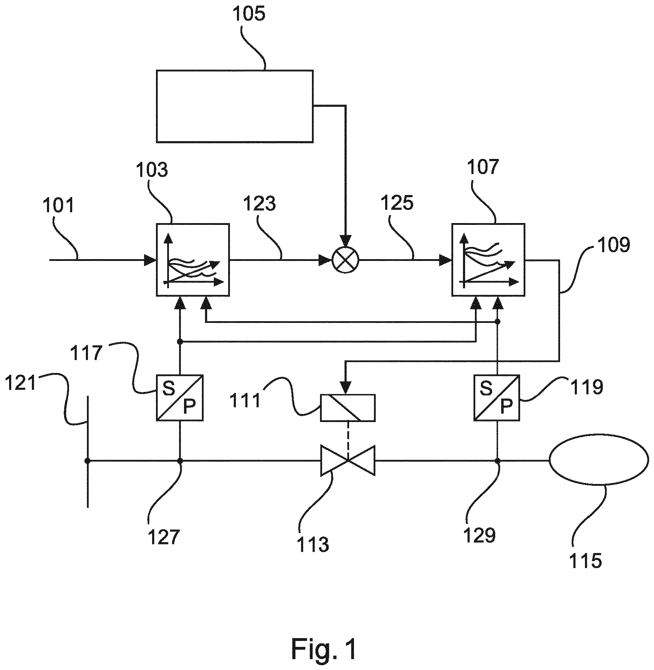

**Fig. 1** zeigt ein Blockschaltbild des erfindungsgemäßen Verfahrens bzw. der in der erfindungsgemäßen Vorrichtung durchgeführten Verfahrensschritte.

Durch einen übergeordneten Regelkreis wird eine Ansteuerdauer 101 vorgegeben, mit der in einem Referenzsystem eine vom übergeordneten Regelkreis geforderte Druckänderung erzielt werden kann. Die Ansteuerdauer 101 wird über einen Signaleingang durch die Vorrichtung eingelesen. Durch die Kenntnis der Ventildynamik 103 des Referenzsystems wird aus der vorgegebenen Ansteuerdauer 101 für das Ventil des Referenzsystems die zugehörige effektive Ventilöffnungszeit 123 des Referenzsystems ermittelt.

In der in Fig. 1 dargestellten Ausführung der Erfindung wird die effektive Ventilöffnungszeit 123 des Referenzsystems aus der vorgegebenen Ansteuerdauer 101 sowie dem Druck 127 vor dem Ventil 113 des Zielsystems und dem Druck 129 nach dem Ventil 113 des Zielsystems bestimmt. Die Drücke werden durch Drucksensoren 117 bzw. 119 gemessen. Die Ermittlung der effektiven Ventilöffnungszeit 123 des Referenzsystems aus der vorgegebenen Ansteuerdauer 101 und den Drücken 127 bzw. 129 erfolgt dabei vorliegend durch Kennfelder, die die Ventildynamik 103 des Referenzsystems abbilden. In diesen Kennfeldern ist in der in Fig. 1 dargestellten Ausführung die effektive Ventilöffnungszeit 123 des Referenzsystems in Abhängigkeit von der Ansteuerdauer 101 und den beiden Drücken 127 und 129 abgelegt.

Die Vorrichtung verfügt über eine Speichereinrichtung, in der die bei der vorgegebenen Ansteuerdauer 101 erzielte effektive Öffnungszeit 123 des Ventils des Referenzsystems und die für eine zu erzielende effektive Öffnungszeit 125 des Ventils 113 des Zielsystems erforderliche Ansteuerdauer 109 sowie Parameter 105, die die pneumatischen Eigenschaften des Referenzsystems und des Zielsystems kennzeichnen, abgespeichert sind.

Die derart ermittelte effektive Ventilöffnungszeit des Referenzsystems, aufgrund derer sich im Referenzsystem eine vom übergeordneten Regelkreis geforderte Druckänderung ergeben würde, wird mit einem Korrekturfaktor 105, der aus Parametern der pneumatischen Eigenschaften des Ziel- und des Referenzsystems ermittelt wird, multipliziert. Daraus ergibt sich die effektive Ventilöffnungszeit 125 des Zielsystems, durch die sich im Zielsystem dieselbe Druckänderung einstellt, wie sie sich im Referenzsystem aufgrund der effektiven Ventilöffnungszeit 123 des Referenzsystems einstellen würde. Die der effektiven Öffnungszeit 123 des Ventils des Referenzsystems entsprechende effektive Öffnungszeit 125 des Ventils 113 des Zielsystems kann beispielsweise unter Berücksichtigung der pneumatischen Geschwindigkeiten des Referenzsystems und des Zielsystems bestimmt werden.

Der Korrekturfaktor 105 ist in der in Fig. 1 dargestellten Ausführung der Quotient aus dem Zeitverhalten des Referenzsystems, d.h. der zeitlichen Ableitung des Druckes des Referenzsystems, und dem Zeitverhalten des Zielsystems, d.h. der zeitlichen Ableitung des Druckes im Zielsystem. Das Zeitverhalten des Referenzsystems und das Zeitverhalten des Zielsystems geben somit an, wie sich der Druck im Referenzsystem bzw. im Zielsystem ändert, und sind beispielsweise von Volumina oder Rohrleitungen der Systeme abhängig. Diese Größen können beispielsweise messtechnisch bestimmt werden. Ist das Referenzsystem dynamischer als das Zielsystem, so ist der Quotient aus dem Zeitverhalten des Referenzsystems und dem Zeitverhalten des Zielsystems größer als 1, so dass die effektive Ventilöffnungszeit 123 des Referenzsystems mit einem Faktor >1 multipliziert wird, und sich damit eine effektive Ventilöffnungszeit 125 des Zielsystems ergibt, die größer ist als die effektive Ventilöffnungszeit 123 des Referenzsystems, da aufgrund der geringeren Dynamik des Zielsystems das Ventil 113 des Zielsystems länger geöffnet sein muss, um die gewünschte Druckänderung einzustellen.

Die der effektiven Öffnungszeit 123 des Ventils des Referenzsystems entsprechende effektive Öffnungszeit 125 des Ventils 113 des Zielsystems kann somit einerseits durch Multiplikation mit dem Quotienten 105 aus der pneumatischen Geschwindigkeit des Referenzsystems und der pneumatischen Geschwindigkeit des Zielsystems bestimmt werden. Die der Dauer der effektiven Öffnungszeit 123 des Ventils des Referenzsystems entsprechende effektive Öffnungszeit 125 des Ventils 113 des Zielsystems kann alternativ auch durch Multiplikation mit dem Quotienten aus dem pneumatischen Leitwert des Referenzsystems und dem pneumatischen Leitwert des Zielsystems bestimmt werden.

Aus der derart ermittelten effektiven Ventilöffnungszeit 125 des Ventils des Zielsystems wird im nächsten Schritt mittels der Ventildynamik 107 des Zielsystems die erforderliche Ansteuerdauer 105 für das Ventil des Zielsystems ermittelt. Die Ansteuerstufe 111 für das Ventil des Zielsystems wird dann mittels der ermittelten Ansteuerdauer 109 für das Ventil des Zielsystems angesteuert, so dass das Ventil 113 des Zielsystems für die geforderte effektive Ventilöffnungszeit 125 geöffnet ist, und sich im Volumen 115 des Zielsystems damit die von der übergeordneten Regelung geforderte Druckänderung einstellt.

Die Ermittlung der Ansteuerdauer 109 für das Ventil des Zielsystems aus der effektiven Ventilöffnungszeit 125 des Zielsystems erfolgt anhand der bekannten Ventildynamik 107 des Zielsystems. Auch die Ventildynamik 107 des Zielsystems hängt neben der Ansteuerdauer 109 des Ventils von den Drücken 127 bzw. 129 vor und nach dem Ventil 113 des Zielsystems ab. In der Vorrichtung des Ausführungsbeispiels sind deshalb ein Signaleingang für den Druck 127 vor dem Ventil 113 des Zielsystems und ein Signaleingang für den Druck 129 nach dem Ventil 113 des Zielsystems vorgesehen, und in der Speichereinrichtung sind die bei der vorgegebenen Ansteuerdauer 101 erzielte effektive Öffnungszeit 123 des Ventils des Referenzystems und die für eine zu erzielende effektive Öffnungszeit 125 des Ventils 113 des Zielsystems erforderliche Ansteuerdauer 109 ferner in Abhängigkeit von den Drücken 127, 129 abgespeichert. Die Ansteuerdauer 109 für das Ventil des Zielsystems ist im in Fig. 1 dargestellten Ausführungsbeispiel in Abhängigkeit von der effektiven Ventilöffnungszeit 125 des Zielsystems sowie den Drücken 127 und 129 vor und nach dem Ventil 113 des Zielsystems in einem Kennfeld abgelegt, das die Ventildynamik wiedergibt, und das beispielsweise durch Messungen ermittelt werden kann.

Die Bestimmung der sich bei der vorgegebenen Ansteuerdauer 101 des Ventils des Referenzsystems, mit der im Referenzsystem die geforderte Druckänderung erzielbar ist, einstellenden effektiven Öffnungszeit 123 des Ventils des Referenzsystems erfolgt im Ausführungsbeispiel gemäß Fig. 1 anhand eines Kennfeldes (103) oder einer Kennlinie. Auch die Bestimmung der zum Erzielen der effektiven Öffnungszeit (125) des Ventils (113) des Zielsystems erforderlichen Ansteuerdauer (109) erfolgt im Ausführungsbeispiel gemäß Fig. 1 anhand eines Kennfeldes (107) oder einer Kennlinie. Alternativ zur Abbildung der Wirkzusammenhänge durch Kennlinien oder Kennfelder können die Wirkzusammenhänge beispielsweise auch durch künstliche neuronale Netze odr durch andere Ansätze des Date Mining abgebildet werden. Es können auch physikalische Modelle oder physikalische Teilmodelle zur Abbildung der Zusammenhänge eingesetzt werden.

In der in Fig. 1 dargestellten Ausführung der Erfindung wird somit aus einer durch einen übergeordneten Regelkreis vorgegebenen Ansteuerdauer 101, die der Regelkreis für ein Ventil eines Referenzsystems bestimmt, eine effektive Ventilöffnungszeit 123 des Referenzsystems ermittelt, durch die sich im Referenzsystem eine geforderte Druckänderung ergeben würde. Diese Ventilöffnungszeit des Referenzsystems wird unter Berücksichtigung der pneumatischen Eigenschaften des Ziel- und des Referenzsystems, die die Dynamik der beiden Systeme wiedergeben, korrigiert, so dass eine effektive Ventilöffnungszeit 125 des Ventils des Zielsystems erhalten wird, durch die sich im Zielsystem dieselbe Druckänderung einstellt, wie sie vom übergeordneten Regelkreis gefordert wird. Aus der effektiven Ventilöffnungszeit 125 des Zielsystems wird unter Verwendung der bekannten Ventildynamik 107 des Zielsystems dann die Ansteuerdauer 109 für das Ventil des Zielsystems ermittelt, die erforderlich ist, um die geforderte effektive Ventilöffnungszeit 125 des Zielsystems, und damit die geforderte Druckänderung im Zielsystem zu erhalten. Das Ventil 113 des Zielsystems wird dann über die derart ermittelte Ansteuerdauer 109 angesteuert, so dass das Ventil 113 über die effektive Ventilöffnungszeit 125 geöffnet ist und sich im Volumen 115 des Zielsystems die von der übergeordneten Regelung geforderte Druckänderung einstellt.

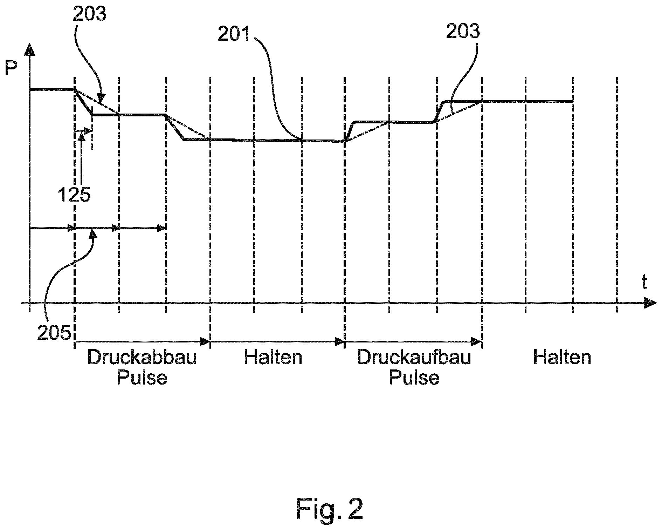

**Fig. 2** zeigt den Druckverlauf P(t) im Zielsystem für eine gepulste Ansteuerdauer, wobei der Druckverlauf 201, der mit der erfindungsgemäßen Vorrichtung und dem erfindungsgemäßen, in Fig. 1 dargestellten Verfahren erzielt wird, und der Druckverlauf 203, der sich in einem durch Düsen korrigierten System einstellen würde, dargestellt sind.

Die erfindungsgemäße Vorrichtung zur Ventilansteuerung wird beispielsweise durch eine übergeordnete Druckregelung angesteuert.Dabei gibt die übergeordnete Druckregelung wie in Fig. 1 dargestellt eine Ansteuerdauer 101 vor, mit der sich ein einem Referenzsystem, auf das die übergeordnete Regelung hin ausgelegt ist, die geforderte Druckänderung einstellen würde. Daraus wird, wie in Fig. 1 dargestellt, eine Ansteuerdauer 109 für das Ventil 113 des Zielsystems ermittelt, mit dem das Ventil 113 des Zielsystems angesteuert wird.

Die Ansteuerung des Ventils des Zielsystems bleibt in dem in Fig. 2 gezeigten Beispiel während einer Abtastzeit 205 der Regelung konstant. Die Abtastintervalle 205 sind in Fig. 2 durch senkrechte gestrichelte Linien gekennzeichnet. In dem dargestellten beispielhaften Ablauf einer vorgegebenen Druckänderung wird nach Ablauf eines ersten Abtastintervalls, in dem noch keine Druckänderung vorgegeben wird, im zweiten Abtastintervall beispielsweise durch eine übergeordnete Regelung ein Druckabbau im Zielsystem vorgegeben. Dem Ventil des Zielsystems werden dabei Druckabbaupulse auferlegt. In dem in Fig. 2 dargestellten Verlauf wird ein Druckabbaupuls nur für das zweite Abtastintervall auferlegt, während im dritten Abtastintervall zunächst kein weiterer Druckabbau gefordert wird, sondern erst im vierten Abtastintervall wieder. Durch den Druckabbauimpuls im zweiten Abtastintervall 205 ergibt sich die dargestellte effektive Ventilöffnungszeit 125 des Ventils des Zielsystems. Dadurch wird im Zielsystem ein Druckverlauf 201 erzielt. Der Druck 201 fällt dabei wie gefordert im zweiten Abtastintervall ab und erreicht stationär denselben Wert 203, der sich der sich in einem durch Düsen korrigierten System einstellen würde. Der Zieldruck wird jedoch mit dem erfindungsgemäßen Verfahren im in Fig. 2 gezeigten Beispiel schneller erreicht als in einem durch Düsen korrigierten System, bei dem hier der Zieldruck erst zum Ende des Abtastintervalls erreicht wird. Danach stimmen der mit dem erfindungsgemäßen Verfahren eingestellte Druck 201 im Zielsystem und der Druckverlauf 203 in einem durch Düsen korrigierten System wieder überein. Im dritten Abtastintervall wird keine Druckänderung vorgegeben. Dadurch stellt sich hier keine weitere Druckänderung ein. Erst im vierten Abtastintervall wird eine weitere Druckabsenkung von außen vorgegeben, und der Druck fällt wie bereits im zweiten Intervall weiter ab. Im achten Intervall wird ein Druckaufbau vorgegeben, worauf der Druck 201 im mit der erfindungsgemäßen Vorrichtung zur Ventilansteuerung versehenen System wieder auf den geforderten Wert ansteigt. Auch der Druck 203 in einem durch Düsen korrigierten System steigt wieder an, und zum Ende des Abtastintervalls stimmen beide Werte wieder überein. Die Druckänderung 203 im durch Düsen korrigierten System verläuft auch beim Druckanstieg langsamer als im mit der erfindungsgemäßen Vorrichtung zur Ventilansteuerung versehenen System.

Dieer Druckverlauf 201 im mit der erfindungsgemäßen Vorrichtung zur Ventilansteuerung versehenen System unterscheidet sich somit nur in Übergangsphasen von dem Druckverlauf 203, der sich in einem durch Düsen korrigierten System einstellen würde. In stationären Phasen stimmt der Druckverlauf 201 des erfindungsgemäßen Systems hingegen mit dem Druckverlauf 203 eines durch Düsen korrigierten Zielsystems überein.

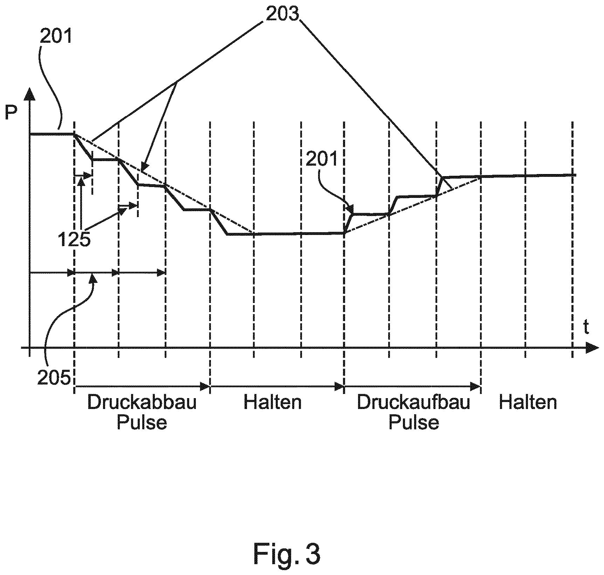

In **Fig. 3** ist ein weiteres Funktionsbeispiel dargestellt, in dem das Ventil des Zielsystems nicht nur während einer Abtastperiode der Regelung angesteuert wird, sondern über mehrere Abtastperioden hinweg, um über eine längere Zeit einen Druckabbau im Zielsystem zu erzielen. Dargestellt sind wie in Fig. 2 der Druckverlauf 201, der mit der erfindungsgemäßen Vorrichtung und dem erfindungsgemäßen, in Fig. 1 dargestellten Verfahren erzielt wird, und der Druckverlauf 203, der sich in einem durch Düsen korrigierten System einstellen würde. Die Abtastintervalle 205 sind wie in Fig. 2 durch senkrechte gestrichelte Linien gekennzeichnet.

Im ersten Abtastintervall wird noch kein Druckabbau gefordert. Ab dem zweiten Abtastintervall 205 wird durch den übergeordneten Regelkreis ein Druckabbau befohlen. Dadurch ergibt sich eine effektive Ventilöffnungszeit im zweiten und den darauffolgenden Abtastintervallen, durch die der Druck 201 im Zielsystem über einen längeren Zeitraum abnimmt. Eine über mehrere Abtastzyklen hinweg andauernde durchgehende Ansteuerdauer des übergeordneten Regelkreises wird damit in mehrere kleine Einzelschritte zerlegt. Der Druckverlauf 201 im Zielsystem ist daher mit einem Druckverlauf 203 in einem durch Düsen korrigierten System in dynamischen Phasen weitgehend, und in stationären Phasen vollständig identisch. Wird, wie in Fig. 3 dargestellt, ab dem achten Abtastintervall wieder ein Druckaufbau befohlen, so ergibt sich wiederum aufgrund des erfindungsgemäßen Verfahrens eine effektive Ventilöffnungszeit des Ventils des Zielsystems, die dazu führt, dass der vom übergeordneten Regelkreis geforderte Druckaufbau eingeleitet wird und die beispielsweise von einer übergeordneten Regelung geforderten Zieldrücke im Zielsystem eingestellt werden.

### BEZUGSZEICHENLISTE

- 101: vorgegebene Ansteuerdauer
- 103: Ventildynamik des Referenzsystems
- 105: Korrekturfaktor
- 107: Ventildynamik des Zielsystems
- 109: Ansteuerdauer für das Ventil des Zielsystems
- 111: Ansteuerstufe für das Ventil des Zielsystems
- 113: Ventil des Zielsystems
- 115: Volumen des Zielsystems
- 117: Drucksensor vor Ventil
- 119: Drucksensor nach Ventil
- 121: Druckleitung
- 123: effektive Ventilöffnungszeit des Referenzsystems
- 125: effektive Ventilöffnungszeit des Zielsystems
- 127: Druck vor Ventil
- 129: Druck nach Ventil
- 201: Druckverlauf im Zielsystem
- 203: Druckverlauf in einem mit Düsen korrigierten System
- 205: Abtastzeit der Regelung

## Patentansprüche

1. Vorrichtung zur Ventilansteuerung, aufweisend
einen Signaleingang für eine vorgegebene Ansteuerdauer (101) für ein Ventil eines Referenzystems, mit der im Referenzsystem eine geforderte Druckänderung erzielbar ist,
einen Signalausgang zur Ausgabe einer Ansteuerdauer (109) für ein Ventil eines Zielsystems, um die geforderte Druckänderung im Zielsystem zu erzielen, **gekennzeichnet durch**
eine Speichereinrichtung, in der die bei der vorgegebenen Ansteuerdauer (101) erzielte effektive Öffnungszeit (123) des Ventils des Referenzsystems und die für eine zu erzielende effektive Öffnungszeit (125) des Ventils (113) des Zielsystems erforderliche Ansteuerdauer (109) sowie Parameter (105), die die pneumatischen Eigenschaften des Referenzsystems und des Zielsystems kennzeichnen, abgespeichert sind,
eine Einrichtung zum Bestimmen der zu der vorgegebenen Ansteuerdauer (101) für das Ventil des Referenzsystems gehörenden effektiven Öffnungszeit (123) des Ventils mittels der in der Speichereinrichtung abgespeicherten Daten (103),
eine Einrichtung zum Bestimmen einer der effektiven Öffnungszeit (123) des Ventils des Referenzsystems entsprechenden effektiven Öffnungszeit (125) des Ventils (113) des Zielsystems, durch die im Zielsystem dieselbe Druckänderung erzielt wird wie im Referenzsystem, mittels der die pneumatischen Eigenschaften des Referenzsystems und des Zielsystems kennzeichnenden Parameter (105), und
eine Einrichtung zum Bestimmen der zum Erzielen der effektiven Öffnungszeit (125) des Ventils (113) des Zielsystems erforderlichen Ansteuerdauer (109) des Ventils (113) mittels der in der Speichereinrichtung abgespeicherten Daten (107).

2. Vorrichtung zur Ventilansteuerung nach Anspruch 1,
wobei die der effektiven Öffnungszeit (123) des Ventils des Referenzsystems entsprechende effektive Öffnungszeit (125) des Ventils (113) des Zielsystems unter Berücksichtigung der pneumatischen Geschwindigkeiten des Referenzsystems und des Zielsystems bestimmbar ist.

3. Vorrichtung zur Ventilansteuerung nach Anspruch 2,
wobei die der effektiven Öffnungszeit (123) des Ventils des Referenzsystems entsprechende effektive Öffnungszeit (125) des Ventils (113) des Zielsystems durch Multiplikation mit dem Quotienten (105) aus der pneumatischen Geschwindigkeit des Referenzsystems und der pneumatischen Geschwindigkeit des Zielsystems bestimmbar ist.

4. Vorrichtung zur Ventilansteuerung nach Anspruch 2,
wobei die der Dauer der effektiven Öffnungszeit (123) des Ventils des Referenzsystems entsprechende effektive Öffnungszeit (125) des Ventils (113) des Zielsystems durch Multiplikation mit dem Quotienten aus dem pneumatischen Leitwert des Referenzsystems und dem pneumatischen Leitwert des Zielsystems bestimmbar ist.

5. Vorrichtung zur Ventilansteuerung nach einem der vorangehenden Ansprüche,
wobei des Weiteren ein Signaleingang für den Druck (127) vor dem Ventil (113) des Zielsystems und ein Signaleingang für den Druck (129) nach dem Ventil (113) des Zielsystems vorgesehen sind,
in der Speichereinrichtung die bei der vorgegebenen Ansteuerdauer (101) erzielte effektive Öffnungszeit (123) des Ventils des Referenzystems und die für eine zu erzielende effektive Öffnungszeit (125) des Ventils (113) des Zielsystems erforderliche Ansteuerdauer (109) ferner in Abhängigkeit von den Drücken (127, 129) abgespeichert sind, und
die zu der vorgegebenen Ansteuerdauer (101) für das Ventil des Referenzsystems gehörende effektive Öffnungszeit (123) des Ventils des Referenzsystems sowie die zum Erzielen der effektiven Öffnungszeit (125) des Ventils (113) des Zielsystems erforderliche Ansteuerdauer (109) des Ventils (113) des Zielsystems unter Berücksichtigung der Drücke (127, 129) vor und nach dem Ventil (113) des Zielsystems bestimmbar sind.

6. Verfahren zur Ventilansteuerung **gekennzeichnet durch** folgende Schritte:
Bestimmen einer sich bei einer vorgegebenen Ansteuerdauer (101) eines Ventils eines Referenzsystems, mit der im Referenzsystem eine geforderte Druckänderung erzielbar ist, einstellenden effektiven Öffnungszeit (123) des Ventils des Referenzsystems,
Bestimmen einer der effektiven Öffnungszeit (123) des Ventils des Referenzsystems entsprechenden effektiven Öffnungszeit (125) eines Ventils (113) eines Zielsystems, durch die im Zielsystem dieselbe Druckänderung erzielt wird wie im Referenzsystem, und
Bestimmen der zum Erzielen der effektiven Öffnungszeit (125) des Ventils (113) des Zielsystems erforderlichen Ansteuerdauer (109) des Ventils (113) des Zielsystems, Ansteuern des Ventils (113) des Zielsystems mit der erforderlichen Ansteuerdauer (109).

7. Verfahren zur Ventilansteuerung nach Anspruch 6,
wobei die effektive Öffnungszeit (123) des Ventils des Referenzsystems mit dem Quotienten (105) aus der pneumatischen Geschwindigkeit des Referenzsystems und der pneumatischen Geschwindigkeit des Zielsystems multipliziert wird, um die effektive Öffnungszeit (125) des Ventils (113) des Zielsystems, durch die im Zielsystem dieselbe Druckänderung erzielt wird wie im Referenzsystem, zu bestimmen.

8. Verfahren zur Ventilansteuerung nach Anspruch 6,
wobei die effektive Öffnungszeit des Ventils (113) des Referenzsystems mit dem Quotienten aus dem pneumatischen Leitwert des Referenzsystems und dem pneumatischen Leitwert des Zielsystems multipliziert wird, um die effektive Öffnungszeit (125) des Ventils (113) des Zielsystems, durch die im Zielsystem dieselbe Druckänderung erzielt wird wie im Referenzsystem, zu bestimmen.

9. Verfahren zur Ventilansteuerung nach einem der Ansprüche 6 bis 8,
wobei die Bestimmung der sich bei der vorgegebenen Ansteuerdauer (101) des Ventils des Referenzsystems, mit der im Referenzsystem die geforderte Druckänderung erzielbar ist, einstellenden effektiven Öffnungszeit (123) des Ventils des Referenzsystems anhand eines Kennfeldes (103) oder einer Kennlinie erfolgt.

10. Verfahren zur Ventilansteuerung nach einem der Ansprüche 6 bis 9,
wobei die Bestimmung der zum Erzielen der effektiven Öffnungszeit (125) des Ventils (113) des Zielsystems erforderlichen Ansteuerdauer (109) anhand eines Kennfeldes (107) oder einer Kennlinie erfolgt.

11. Verfahren zur Ventilansteuerung nach einem der Ansprüche 6 bis 10,
wobei bei der Bestimmung der sich einstellenden effektiven Öffnungszeit (123) des Ventils des Referenzsystems bei vorgegebener Ansteuerdauer (101) und der zum Erzielen der effektiven Öffnungszeit (125) des Ventils (113) des Zielsystems erforderlichen Ansteuerdauer (109) die Drücke (127, 129) vor und hinter dem Ventil (113) des Zielsystems berücksichtigt werden.

12. Verfahren zur Ventilansteuerung nach einem der Ansprüche 6 bis 11,
wobei die Abtastzeit (205) eines übergeordneten Regelkreises oder ein ganzzahliges Mehrfaches dieser Abtastzeit (205) als Sollzeit für die vorgegebene Ansteuerdauer verwendet wird.

## Claims

1. A device for valve actuation, comprising
a signal input for a predetermined actuation duration (101) for a valve of a reference system, with which a required pressure change can be achieved in the reference system,
a signal output for outputting an actuation duration (109) for a valve of a target system in order to achieve the required pressure change in the target system,
a storage device in which the effective opening time (123) of the valve of the reference system achieved for the predetermined actuation duration (101) and the required actuation duration (109) for an effective opening time (125) to be achieved for the valve (113) of the target system as well as parameters (105) characterizing the pneumatic properties of the reference system and the target system are stored,
a device for determining the effective opening time (123) of the valve belonging to the predetermined actuation duration (101) for the valve of the reference system by means of the data (103) stored in the storage device,
a device for determining an effective opening time (125) of the valve (113) of the target system corresponding to the effective opening time (123) of the valve of the reference system by which the same pressure change is achieved in the target system as in the reference system, by means of the parameters (105) characterizing the pneumatic properties of the reference system and the target system, and
a device for determining the actuation duration (109) of the valve (113) required to achieve the effective opening time (125) of the valve (113) of the target system by means of the data (107) stored in the storage device.

2. The device for valve actuation as claimed in claim 1,
wherein the effective opening time (125) of the valve (113) of the target system corresponding to the effective opening time (123) of the valve of the reference system is determinable by factoring in the pneumatic velocities of the reference system and the target system.

3. The device for valve actuation as claimed in claim 2,
wherein the effective opening time (125) of the valve (113) of the target system corresponding to the effective opening time (123) of the valve of the reference system is determinable by multiplying with the quotient (105) of the pneumatic velocity of the reference system divided by the pneumatic velocity of the target system.

4. The device for valve actuation as claimed in claim 2,
wherein the effective opening time (125) of the valve (113) of the target system corresponding to the duration of the effective opening time (123) of the valve of the reference system is determinable by multiplying with the quotient of the pneumatic conductance of the reference system divided by the pneumatic conductance of the target system.

5. The device for valve actuation as claimed in one of the preceding claims,
wherein furthermore a signal input for the pressure (127) upstream of the valve (113) of the target system and a signal input for the pressure (129) downstream of the valve (113) of the target system are provided,
moreover the effective opening time (123) of the valve of the reference system achieved for the predetermined actuation duration (101) and the actuation duration (109) required for an effective opening time (125) to be achieved for the valve (113) of the target system are stored in the storage device as functions of the pressures (127, 129), and
the effective opening time (123) of the valve of the reference system belonging to the predetermined actuation duration (101) for the valve of the reference system and the actuation duration (109) of the valve (113) of the target system required to achieve the effective opening time (125) of the valve (113) of the target system are determinable by factoring in the pressures (127, 129) upstream and downstream of the valve (113) of the target system.

6. A method for valve actuation with the following steps:
determining an effective opening time (123) of the valve of the reference system established for a predetermined actuation duration (101) of a valve of a reference system by which a required pressure change in the reference system can be achieved,
determining an effective opening time (125) of a valve (113) of a target system corresponding to the effective opening time (123) of the valve of the reference system by which the same pressure change is achieved in the target system as in the reference system, and
determining the actuation duration (109) of the valve (113) of the target system required to achieve the effective opening time (125) of the valve (113) of the target system,
actuating the valve (113) of the target system with the required actuation duration (109).

7. The method for valve actuation as claimed in claim 6,
wherein the effective opening time (123) of the valve of the reference system is multiplied by the quotient (105) of the pneumatic velocity of the reference system divided by the pneumatic velocity of the target system in order to determine the effective opening time (125) of the valve (113) of the target system by which the same pressure change is achieved in the target system as in the reference system.

8. The method for valve actuation as claimed in claim 6,
wherein the effective opening time of the valve (113) of the reference system is determined with the quotient of the pneumatic conductance of the reference system divided by the pneumatic conductance of the target system in order to determine the effective opening time (125) of the valve (113) of the target system by which the same pressure change is achieved in the target system as in the reference system.

9. The method for valve actuation as claimed in one of claims 6 to 8,
wherein the determining of the effective opening time (123) of the valve of the reference system established for the predetermined actuation duration (101) of the valve of the reference system, with which the required pressure change can be achieved in the reference system, is done with the aid of a characteristic map (103) or a characteristic curve.

10. The method for valve actuation as claimed in one of claims 6 to 9,
wherein the determining of the actuation duration (109) required to achieve the effective opening time (125) of the valve (113) of the target system is done with the aid of a characteristic map (107) or a characteristic curve.

11. The method for valve actuation as claimed in one of claims 6 to 10,
wherein the pressures (127, 129) upstream and downstream of the valve (113) of the target system are factored in when determining the effective opening time (123) established for the valve of the reference system at the predetermined actuation duration (101) and the actuation duration (109) required to achieve the effective opening time (125) of the valve (113) of the target system.

12. The method for valve actuation as claimed in one of claims 6 to 11,
wherein the sampling time (205) of a higher-order control loop or an integer multiple of this sampling time (205) is used as the nominal time for the predetermined actuation duration.

## Revendications

1. Dispositif de commande de soupape, comportant
une entrée de signal pendant une durée (101) de commande donnée à l'avance pour une soupape d'un système de référence, par laquelle il peut être atteint, dans le système de référence, une variation de pression exigée,
une sortie de signal, pour la sortie d'une durée (109) de commande d'une soupape d'un système cible, afin d'atteindre, dans le système cible, la variation de pression exigée,
**caractérisé par**
un dispositif de mise en mémoire, dans lequel le temps (123) d'ouverture effectif de la soupape du système de référence, atteint lors de la durée (101) de commande donnée à l'avance, et la durée (109) de commande, nécessaire pour un temps (125) d'ouverture effectif à atteindre de la soupape (113) du système cible, ainsi que des paramètres (105), qui caractérisent les propriétés pneumatiques du système de référence et du système cible, sont mis en mémoire,
un dispositif de détermination du temps (123) d'ouverture efficace de la soupape, appartenant à la durée (101) de commande donnée à l'avance de la soupape du système de référence, au moyen des données (103) mises en mémoire dans le dispositif de mise en mémoire,
un dispositif de détermination d'un temps (125) d'ouverture effectif de la soupape (113) du système cible, correspondant au temps (123) d'ouverture effectif de la soupape du système de référence, par lequel il atteint, dans le système cible, la même variation de pression que dans le système de référence, au moyen des paramètres (105) caractérisant les propriétés pneumatiques du système de référence et du système cible, et
un dispositif de détermination de la durée (109) de commande de la soupape (113), nécessaire pour atteindre le temps (125) d'ouverture effectif de la soupape (113) du système cible, au moyen des données (107) mises en mémoire dans le dispositif de mise en mémoire.

2. Dispositif de commande de soupape suivant la revendication 1,
dans lequel le temps (125) d'ouverture effectif de la soupape (113) du système cible, correspondant au temps (123) d'ouverture effectif de la soupape du système de référence, peut être déterminé en tenant compte des vitesses pneumatiques du système de référence et du système cible.

3. Dispositif de commande de soupape suivant la revendication 2,
dans lequel le temps (125) d'ouverture effectif de la soupape (113) du système, correspondant au temps (123) d'ouverture de la soupape du système de référence, peut être déterminé par multiplication par le quotient (105) de la vitesse pneumatique du système de référence et de la vitesse pneumatique du système cible.

4. Dispositif de commande de soupape suivant la revendication 2,
dans lequel le temps (125) d'ouverture effectif de la soupape (113) du système cible, correspondant au temps (123) d'ouverture effectif de la soupape du système de référence, peut être déterminé par multiplication par le quotient de l'admittance pneumatique du système de référence et de l'admittance pneumatique du système cible.

5. Dispositif de commande de soupape suivant l'une des revendications précédentes,
dans lequel en outre il est prévu une entrée de signal pour la pression (127) avant la soupape (113) du système cible et une entrée de signal pour la pression (129) après la soupape (113) du système cible,
dans le dispositif de mise en mémoire, le temps (123) d'ouverture effectif de la soupape du système de référence atteint, lors de la durée (101) de commande donnée à l'avance, et la durée (109) de commande nécessaire pour un temps (125) d'ouverture effectif à atteindre de la soupape (113) du système cible sont mis en mémoire en outre en fonction des pressions (127, 129), et
le temps (123) d'ouverture effectif de la soupape du système de référence appartenant à la durée (101) de commande donnée à l'avance de la soupape du système de référence, ainsi que la durée (109) de commande de la soupape (113) du système cible, nécessaire pour atteindre le temps (125) d'ouverture effectif de la soupape (113) du système cible, peuvent être déterminés en tenant compte des pressions (127, 129) avant et après la soupape (113) du système cible.

6. Procédé de commande de soupape **caractérisé par** les stades suivants :
détermination d'un temps (123) d'ouverture effectif d'une soupape d'un système de référence, s'établissant lors d'une durée (101) de commande donnée à l'avance de la soupape du système de référence, par laquelle une variation de pression exigée peut être atteinte dans le système de référence,
détermination d'un temps (125) d'ouverture effectif d'une soupape (113) d'un système cible, correspondant au temps (123) d'ouverture effectif de la soupape du système de référence, par lequel il est obtenu, dans le système cible,, la même variation de pression que dans le système de référence, et
détermination de la durée (109) de commande de la soupape (113) du système cible, nécessaire pour atteindre le temps (125) d'ouverture effectif de la soupape (113) du système cible, commande de la soupape (113) du système cible avec la durée (109) de commande nécessaire.

7. Procédé de commande de soupape suivant la revendication 6,
dans lequel on multiplie le temps (123) d'ouverture effectif de la soupape du système de référence par le quotient (105) de la vitesse pneumatique du système de référence et de la vitesse pneumatique du système cible, afin de déterminer le temps (125) d'ouverture effectif de la soupape (113) du système cible, par lequel on obtient, dans le système cible, la même variation de pression que dans le système de référence.

8. Procédé de commande de soupape suivant la revendication 6,
dans lequel on multiplie le temps d'ouverture effectif de la soupape (113) du système de référence par le quotient de l'admittance pneumatique du système de référence et de l'admittance pneumatique du système cible, afin de déterminer le temps (125) d'ouverture effectif de la soupape (113) du système cible, par lequel on obtient, dans le système cible, la même variation de pression que dans le système de référence.

9. Procédé de commande de soupape suivant l'une des revendications 6 à 8,
dans lequel la détermination du temps (123) d'ouverture efficace de la soupape du système de référence, s'établissant lors de la durée (101) de commande donnée à l'avance de la soupape du système de référence, par laquelle la variation de pression exigée peut être atteinte dans le système de référence, s'effectue à l'aide d'un diagramme (103) caractéristique ou d'une courbe caractéristique.

10. Procédé de commande de soupape suivant l'une des revendications 6 à 9,
dans lequel la détermination de la durée (109) de commande, nécessaire pour atteindre le temps (125) d'ouverture effectif de la soupape (113) du système cible, s'effectue à l'aide d'un diagramme (107) caractéristique ou d'une courbe caractéristique.

11. Procédé de commande de soupape suivant l'une des revendications 6 à 10,
dans lequel, lors de la détermination du temps (123) d'ouverture effectif de la soupape du système de référence, s'établissant pour la durée (101) de commande donnée à l'avance, et de la durée (109) de commande, nécessaire pour atteindre le temps (125) d'ouverture effectif de la soupape (113) du système cible, on tient compte des pressions (127, 129) avant et après la soupape (113) du système cible.

12. Procédé de commande de soupape suivant l'une des revendications 6 à 11,
dans lequel on utilise le temps (205) d'échantillonnage d'un circuit de régulation supérieur hiérarchiquement ou d'un multiple en nombre entier de ce temps (205) d'échantillonnage comme valeur de consigne de la durée de commande donnée à l'avance.
